# EUROPEAN PATENT APPLICATION

(11) **EP 4 488 848 A1**
(43) Date of publication of application: **08.01.2025**
(21) Application number: 24160053.5
(22) Date of filing: 27.02.2024
(51) Int. Cl.: G06F 16/332, G06F 16/583, G06N 3/02

(54) **INFORMATION PROCESSING DEVICE, INFORMATION PROCESSING METHOD, AND COMPUTER-READABLE MEDIUM**

(30) Priority: 04.07.2023 JP 2023110203
(71) Applicant: Kabushiki Kaisha Toshiba, Tokyo 105-0023 (JP)
(72) Inventor: MISHIMA, Nao, Tokyo (JP); TOKUYAMA, Hirotaka, Tokyo (JP); NODA, Reiko, Tokyo (JP)
(74) Representative: Marks & Clerk LLP

(57) **Abstract**

According to an arrangement, an information processing device (1) includes a detection unit (11), a cut-out unit (12), an acquisition unit (13), and a visual question answering (VQA) processing unit (15). The detection unit (11) is configured to detect at least one piece of object information including an object area containing an object to be detected and object identification information for identifying the object to be detected, from an image. The cut-out unit (12) is configured to generate at least one object image, by cutting out at least one object area from the image. The acquisition unit (13) is configured to acquire at least one question according to the object identification information. The VQA processing unit (15) is configured to perform a VQA process with the at least one question, for each of the at least one object image.

## Description

### FIELD

The present disclosure relates to an information processing device, an information processing method, and a computer-readable medium.

### BACKGROUND

Artificial intelligence (AI) techniques for visual question answering (VQA) have been conventionally known. The VQA is a task of answering a correct answer, when a single image and a question related to the image are given. This task is a cross-modal task that requires to handle both knowledge on the image and knowledge on the text in a correct manner. The related technologies are described, for example, in: GLIP BLIP, [online], [retrieved June 15, 2023], Internet <URL: https://huggingface.co/spaces/Pinwheel/GLIP-BLIP-Object-Detection-VQA>; Faster R-CNN, Girshick Ross, Proceedings of the IEEE international conference on computer vision. 2015; Visual Question Answering, [online], [retrieved June 15, 2023], Internet <URL: https://visualqa.org/>; MSCOCO, [online], [retrieved June 15, 2023], Internet <URL: https://tech.amikelive.com/node-718/what-object-categories-labels-are-in-coco-dataset/>; Anderson, Peter, et al. "Bottom-up and top-down attention for image captioning and visual question answering." Proceedings of the IEEE conference on computer vision and pattern recognition. 2018; and Gu, Xiuye, et al. "Open-vocabulary object detection via vision and language knowledge distillation." arXiv preprint arXiv: 2104.13921 (2021).

### BRIEF DESCRIPTION OF THE DRAWINGS

Fig. 1 is a schematic diagram illustrating an example of VQA;
Fig. 2 is a diagram illustrating an example of an image analysis system using VQA;
Fig. 3 is a diagram for explaining Example 1 of the problem of VQA;
Fig. 4 is a diagram for explaining Example 2 of the problem of VQA;
Fig. 5 is a diagram illustrating an example of a functional configuration of an information processing device of a first arrangement;
Fig. 6 is a schematic diagram illustrating a processing example of a VQA processing unit of the first arrangement;
Fig. 7 is a diagram illustrating an example of a format of a question ID for identifying the question in the first arrangement;
Fig. 8 is a diagram illustrating an overview of a VQA process in the first arrangement;
Fig. 9 is a diagram illustrating an example of display information in the first arrangement;
Fig. 10 is a flowchart illustrating an example of an information processing method in the first arrangement;
Fig. 11 is a diagram for explaining Example 1 of the effects according to the first arrangement;
Fig. 12 is a diagram for explaining Example 2 of the effects according to the first arrangement;
Fig. 13 is a diagram illustrating an example of a functional configuration of an information processing device of a second arrangement;
Fig. 14 is a schematic diagram illustrating an example of a voting process in the second arrangement;
Fig. 15 is a diagram illustrating a relation between the number of votes and recognition accuracy in the second arrangement;
Fig. 16 is a flowchart illustrating an example of an information processing method in the second arrangement;
Fig. 17 is a flowchart illustrating an example of a voting process at step S18 in the second arrangement;
Fig. 18 is a flowchart illustrating an example of a fixing process at step S18 in the second arrangement;
Fig. 19 is a diagram illustrating an example of a functional configuration of an information processing device of a third arrangement;
Fig. 20 is a diagram for explaining a processing example of a transformation unit in the third arrangement;
Fig. 21 is a diagram illustrating an example of a functional configuration of an information processing device of a fourth arrangement; and
Fig. 22 is a diagram illustrating an example of a hardware configuration of the information processing device of the first to fifth arrangements.

### DETAILED DESCRIPTION

According to an arrangement, an information processing device includes a detection unit, a cut-out unit, an acquisition unit, and a visual question answering (VQA) processing unit. The detection unit is configured to detect at least one piece of object information including an object area containing an object to be detected and object identification information for identifying the object to be detected, from an image. The cut-out unit is configured to generate at least one object image, by cutting out at least one object area from the image. The acquisition unit is configured to acquire at least one question according to the object identification information. The VQA processing unit is configured to perform a VQA process with the at least one question, for each of the at least one object image.

Hereinafter, arrangements of a computer program, an information processing device, and an information processing method will be described in detail with reference to the accompanying drawings.

### First Arrangement

First, an overview of VQA will be described.

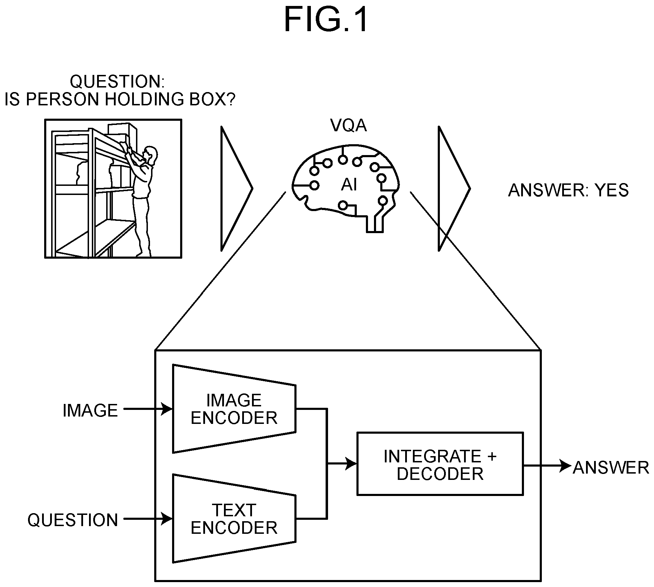

Fig. 1 is a schematic diagram illustrating an example of VQA. The VQA is an AI that determines the content of an image in response to any question, and that answers the question. The most important feature of VQA is that a question is given in a free-form natural language text. Consequently, and theoretically, the VQA has high versatility capable of being applied to various matters that can be expressed in text.

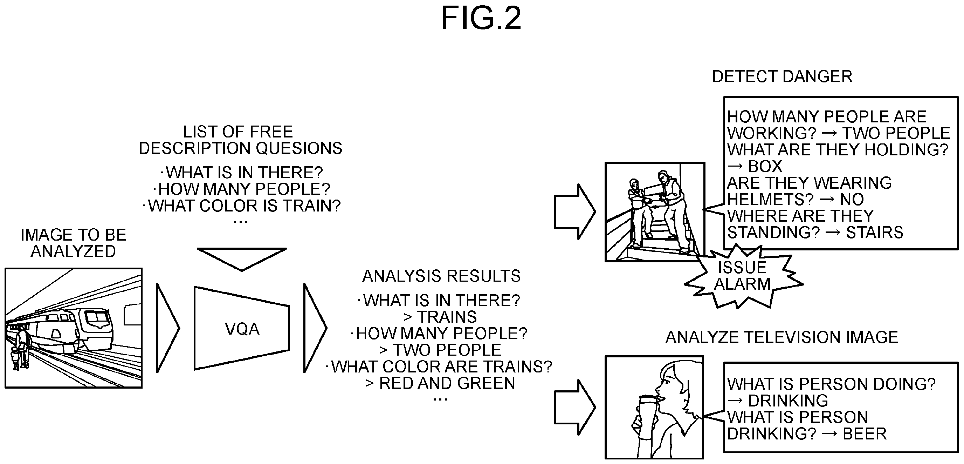

Fig. 2 is a diagram illustrating an example of an image analysis system using VQA. By applying a list of questions prepared in advance to an image to be analyzed, it is possible to build a system capable of analyzing any image. For example, as illustrated in Fig. 2, it is possible to build a system for detecting danger (automatic alert system), a system for analyzing television images (automatic extraction system for any scene), and the like.

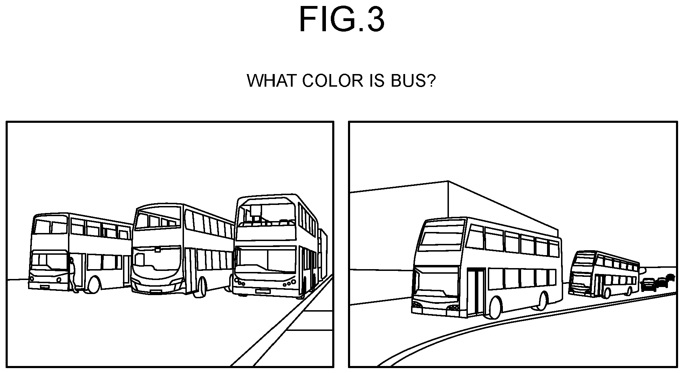

Fig. 3 is a diagram for explaining Example 1 of the problem of VQA. As illustrated in Fig. 3, one of the major problems of VQA is that it is not possible to identify the object to which the question is referring, when there are a plurality of objects (in the example of Fig. 3, buses) in an image.

For example, if there is a question such as "What color is the bus?", because there are three buses in the left image in Fig. 3, and two buses in the right image in Fig. 3, it is not clear on which bus the answer should be made. For example, questions such as "What color is the bus on the left?", "What color is the bus in the middle?", and "What color is the bus on the right?" can cope with the left image in Fig. 3. However, because there are only two buses in the right image in Fig. 3, the answer would still be ambiguous.

That is, if individual images can be confirmed in advance, it is possible to ask an appropriate question on a specific object. However, in a system intended for any image, images cannot be confirmed in advance. Hence, it is not possible to ask an appropriate question.

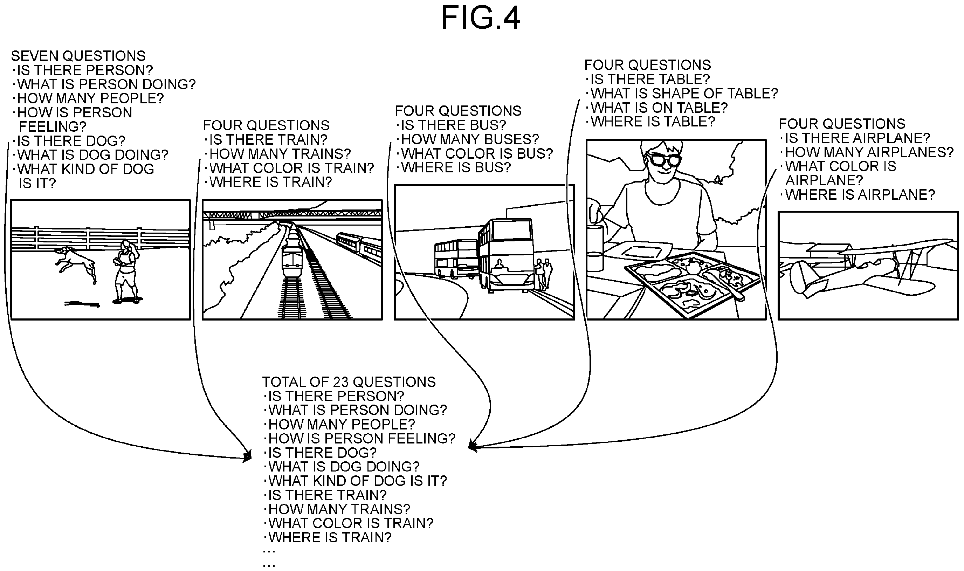

Fig. 4 is a diagram for explaining Example 2 of the problem of VQA. As illustrated in Fig. 4, another problem of VQA is that if there are a plurality of objects to be analyzed such as a person, dog, train, bus, table, and airplane, to cover all the objects, a list of questions including 23 questions related to all the objects needs to be applied to all the images.

For example, in the example of Fig. 4, among five images, a train, bus, table, and airplane are not included in the leftmost image. However, questions on the train, bus, table, and airplane also need to be processed in the leftmost image, thereby increasing the amount of unnecessary processing.

That is, with an increase in the number of images to be analyzed, the number of questions is increased. Because questions not relevant to the image to be processed are also processed, the amount of processing will be increased.

### Example of Functional Configuration

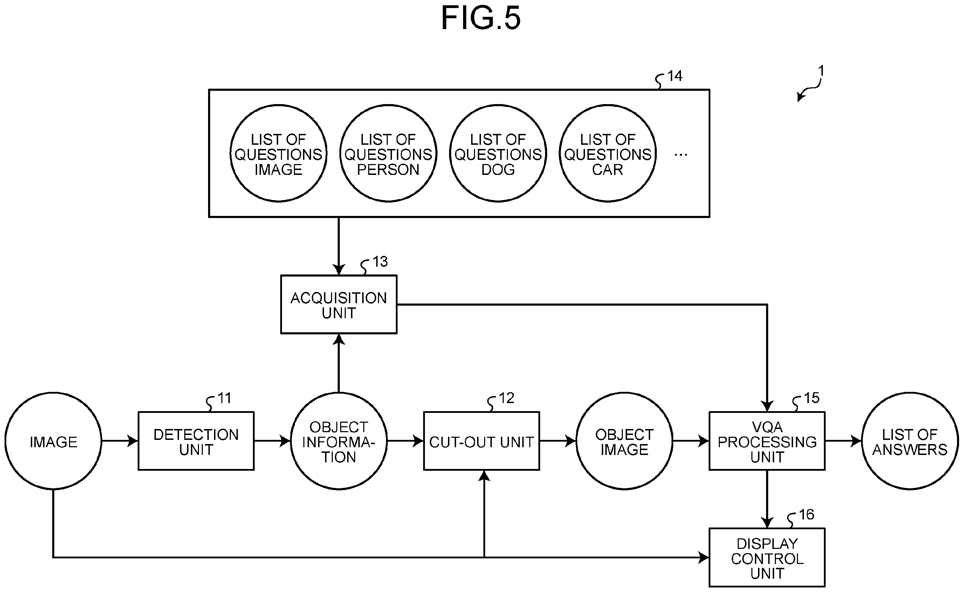

Fig. 5 is a diagram illustrating an example of a functional configuration of an information processing device 1 of a first arrangement. The information processing device 1 of the first arrangement includes a detection unit 11, a cut-out unit 12, an acquisition unit 13, a storage unit 14, a VQA processing unit 15, and a display control unit 16.

The detection unit 11 detects at least one piece of object information including an object area containing an object to be detected (for example, a substance, person, and the like) and an object ID (an example of object identification information) for identifying the object to be detected. The object ID includes a label (an example of object type) indicating the type of the object to be detected, and information (for example, the number and the like) for uniquely specifying the object to be detected. For example, if the detected object is a person, the object is specified by assigning a unique object ID such as "substance (person) 1" and "substance (person) 2" for each object.

For example, Faster R-CNN, Girshick Ross, Proceedings of the IEEE international conference on computer vision. 2015 or the like is used for the detection process. In the normal object detection, a detection process is performed on all labels used for the training. However, in the first arrangement, a detection process is performed on a label associated with a question set in advance.

Upon finding an object to be detected, a detection engine used in the detection unit 11 returns the coordinates of a box containing the object to be detected and the label. For example, the format of the box coordinates is coordinates for specifying a rectangular region (x-coordinate and y-coordinate of the upper left, and x-coordinate and y-coordinate of the lower right).

The cut-out unit 12 generates at least one object image, by cutting out at least one object area from the image. For example, for each detected object, the cut-out unit 12 cuts out a rectangular region including the object, as an object area.

The acquisition unit 13 acquires at least one question according to a label indicating the type of the object to be detected, from the storage unit 14.

The storage unit 14 stores a list of questions (at least one question) for each label indicating the type of object to be detected.

The VQA processing unit 15 performs a VQA process with at least one of the question for each of at least one object image.

In the VQA processing unit 15, an AI that determines the content of an image with respect to any question and that answers the question, as illustrated in Fig. 1 described above will be used. The AI can be configured in various ways. However, the typical configuration of AI is as illustrated in the lower part in Fig. 1. An image is converted into a feature vector by an image encoder. Similarly, a question (text) is converted into a feature vector by a text encoder. The answer is obtained by a decoder that generates an answer by integrating the feature vectors.

For example, an AI model of the VQA is trained using VQA dataset (Visual Question Answering, [online], [retrieved June 15, 2023], Internet <URL: https://visualqa.org/>) and the like.

The VQA processing unit 15 inputs the selected image and question into the AI model of the VQA, and obtains an answer from the AI model. At the same time the answer is obtained, the VQA processing unit 15 may also obtain a predicted probability (reliability) of the answer from the AI model, and output the predicted probability.

For example, a label based on Microsoft (registered trademark) Common Objects in Context (MSCOCO) is used for the label associated with a question. The MSCOCO is the most commonly used benchmark dataset for object detection. In the MSCOCO, 80 labels related to general objects such as a person, car, dog, cat, train, bus, and table are used (for example, see MSCOCO, [online], [retrieved June 15, 2023], Internet <URL: https://tech.amikelive.com/node-718/what-object-categories-labels-are-in-coco-dataset/>) .

As a special label in the present arrangement, a label named "image" may also be prepared. This label represents the entire image, and this "image" label is used for a question on the entire scene and the like.

Moreover, there is no need to use all the labels prepared in the MSCOCO, and only the label required for the question may be used (for example, person, car, and the like).

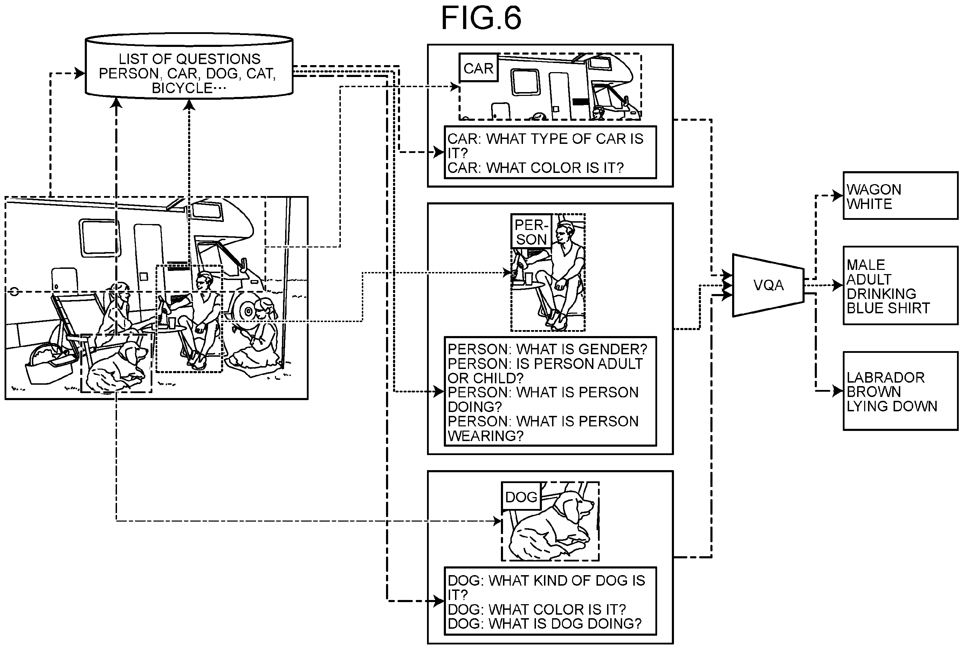

Fig. 6 is a schematic diagram illustrating a processing example of the VQA processing unit 15 of the first arrangement. In view of the problems illustrated in Fig. 3 and Fig. 4 above, as illustrated in Fig. 6, the VQA processing unit 15 applies VQA to each object detected from the image. By applying VQA to each object, it is possible to solve the problem in Fig. 3 described above.

Moreover, questions on an image may differ depending on each type (label) of the object to be detected. For example, a question on the color of the clothes may be asked for a person, but this question is not appropriate for an automobile. On the contrary, a question on the number of doors may be asked for an automobile, but this question is not appropriate for a person. Therefore, as illustrated in Fig. 6, a list of questions is prepared for each label (in the example of Fig. 6, car, person and dog), and the VQA processing unit 15 applies an appropriate question to each label of the detected object.

Specifically, in the example of Fig. 6, a plurality of questions appropriate to each of the labels that identify the car, person, and dog are applied. By preparing a different list of questions for each label that identifies an object, it is possible to solve the problem in Fig. 4 described above.

Moreover, the question is managed by a question ID (an example of question identification information) that uniquely identifies a question. The acquisition unit 13 assigns question identification information to at least one question applied to each object image generated by the cut-out unit 12.

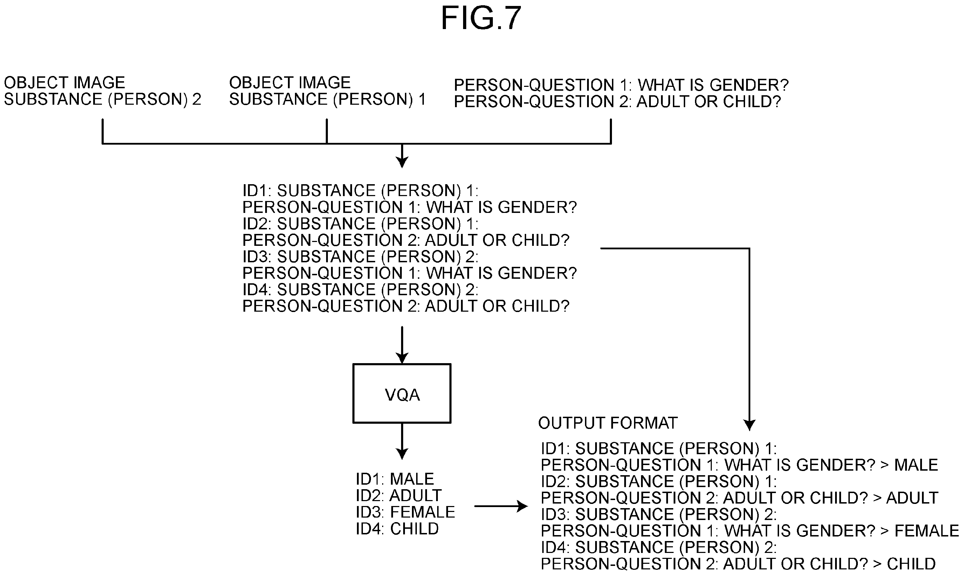

Fig. 7 is a diagram illustrating an example of a format of a question ID for identifying the question in the first arrangement. There may be a case where multiple objects with the same label may be detected from an image. Hence, the object, and the question and answer with respect to the object, need to be uniquely specified. The example in Fig. 7 is an example of a format that manages the question and answer for each object to be detected.

Fig. 7 is an example where there are two objects ("substance (person) 1" and "substance (person) 2"), and where there are "person-question 1" and "person-question 2" related to the label that identifies the objects.

In the example of Fig. 7, "person-question 1" and "person-question 2" are IDs for identifying a question on a person. The "person-question 1" indicates that this question is the first question on a person. The "person-question 2" indicates that this question is the second question on the person. In this case, there are a total of four combinations, and unique question IDs "ID1" to "ID4" are assigned to each of the four combinations.

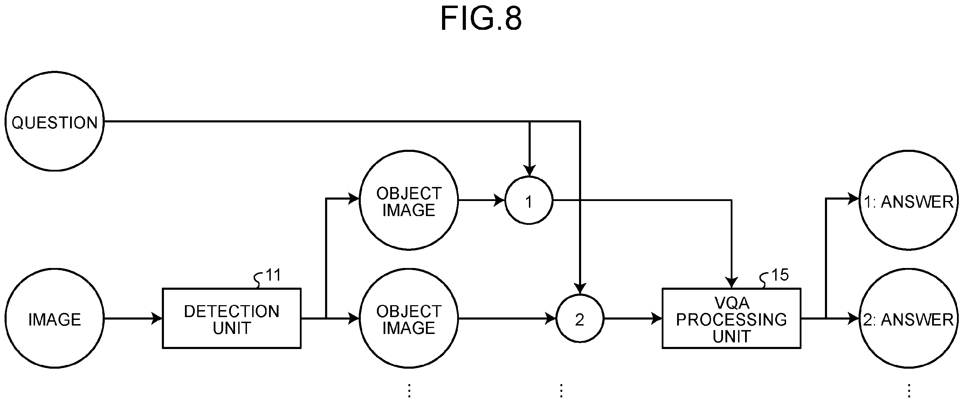

By linking the answer of the VQA to each of the question IDs, it is possible to uniquely associate the answer, the object, and the question with one another (see Fig. 8). The answer, the object, and the question may also be output in a data format such as a file as VQA process result information. That is, the VQA processing unit 15 may output the VQA process result information in which the object ID (an example of object identification information), the question ID (an example of question identification information), and an answer to the question identified by the question ID are associated with one another.

The question ID for identifying the question may also be identified by any word such as "gender" and "color" instead of the number, as long as the question ID is identification information that can uniquely specify the question. Moreover, there is no limit to the number of labels for identifying the object to be detected, or the number of questions.

Returning to Fig. 5, by displaying the display information in which the VQA process result information is superimposed on the image on the display device, the display control unit 16 can visualizes the VQA process result information in an easy-to-understand manner.

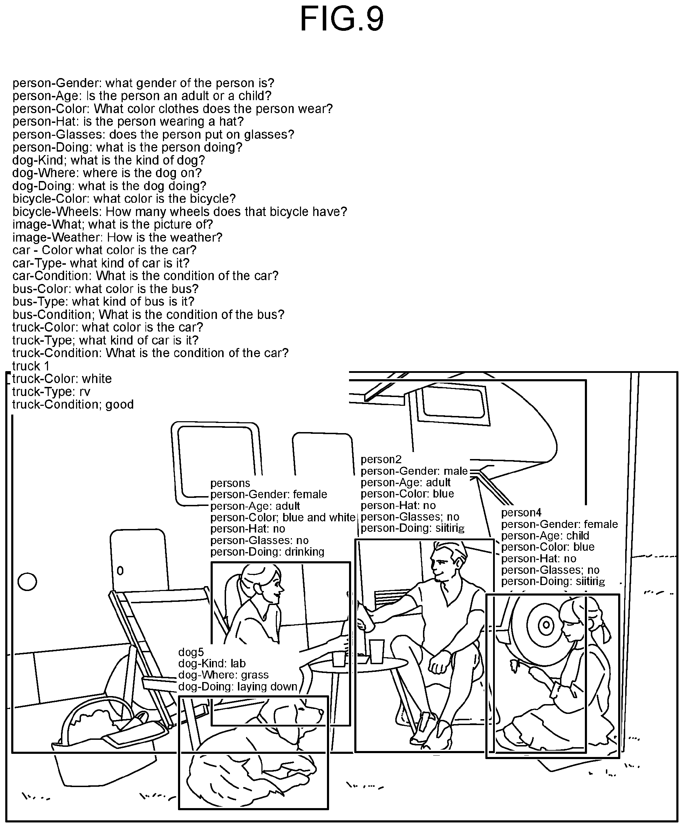

Fig. 9 is a diagram illustrating an example of display information in the first arrangement. Fig. 9 illustrates an example in which one car, three people, and one dog are detected. In the example of Fig. 9, the VQA process result information is visualized in an easy-to-understand manner, by displaying the detected objects in boxes, and arranging the object ID, the question IDs, and the answers to the questions above the boxes. That is, the display control unit 16 displays the display information in which the VQA process result information including the object ID, the question IDs, and the answers to the questions is assigned to the object to be detected that is identified by the object ID included in the VQA process result information, on the display device.

### Example of Information Processing Method

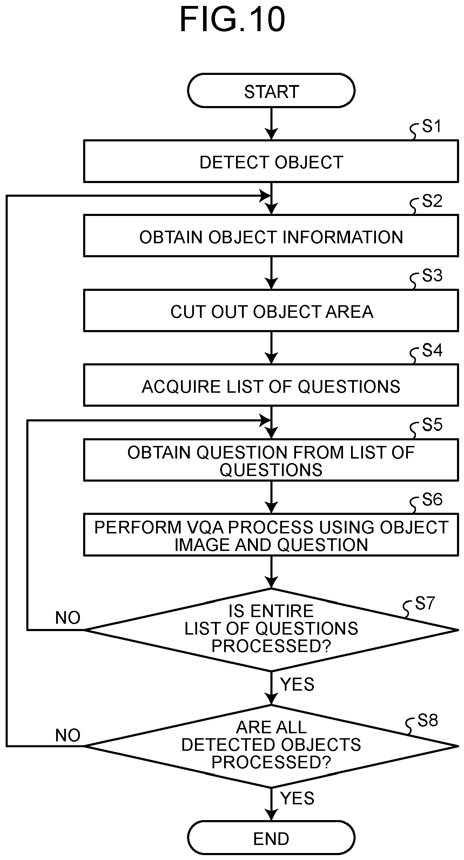

Fig. 10 is a flowchart illustrating an example of an information processing method in the first arrangement. First, the detection unit 11 detects at least one object from an image (step S1), and obtains object information including information for specifying the object area (for example, box coordinates described above), and a label for identifying the object (step S2).

Next, the cut-out unit 12 obtains an object image by cutting out an object area from the image, on the basis of the object information obtained at step S2 (step S3).

Next, the acquisition unit 13 acquires a list of questions (at least one question) according to the label for identifying the object from the storage unit 14, on the basis of the object information obtained at step S2 (step S4) .

Next, the VQA processing unit 15 obtains a question from the list of questions obtained at step S4 (step S5). Next, the VQA processing unit 15 performs a VQA process using the object image obtained at step S3 and the question obtained at step S5 (step S6).

Next, the VQA processing unit 15 determines whether the entire list of questions are processed (step S7). If the entire list of questions are not yet processed (No at step S7), the process returns to step S5.

If the entire list of questions are processed (Yes at step S7), the detection unit 11 determines whether all the objects detected at step S1 are processed (step S8). If all the objects detected at step S1 are not yet processed (No at step S8), the process returns to step S2. If all the objects detected at step S1 are processed (Yes at step S8), the process is finished.

As described above, in the information processing device 1 of the first arrangement, the detection unit 11 detects at least one piece of object information including an object area containing an object to be detected and object identification information for identifying the object to be detected, from an image. The cut-out unit 12 generates at least one object image, by cutting out at least one object area from the image. The acquisition unit 13 acquires at least one question according to the object identification information. The VQA processing unit 15 performs a VQA process on at least one of the object images with at least one of the questions.

Consequently, according to the first arrangement, even if there are multiple objects in an image, it is possible to obtain more accurate processing results with less amount of processing.

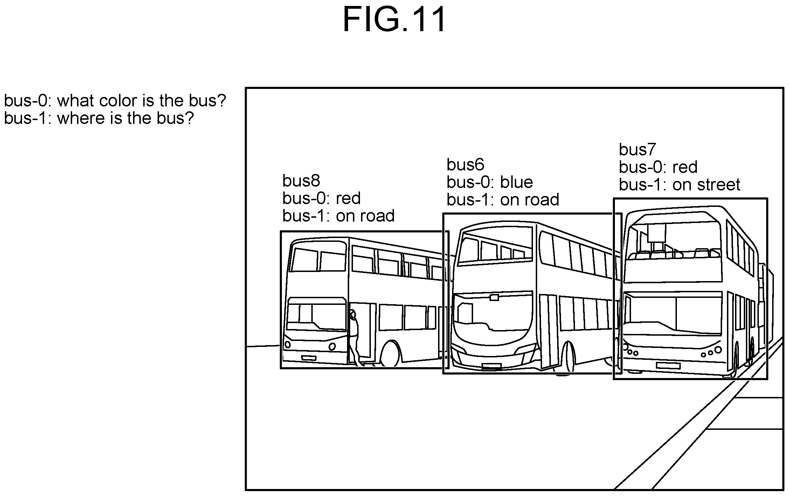

Fig. 11 is a diagram for explaining Example 1 of the effects according to the first arrangement. According to the first arrangement, it is possible to apply question to each object, and obtain an answer to the question. In the example of Fig. 11, a list of questions related to a bus is applied to each of the three buses.

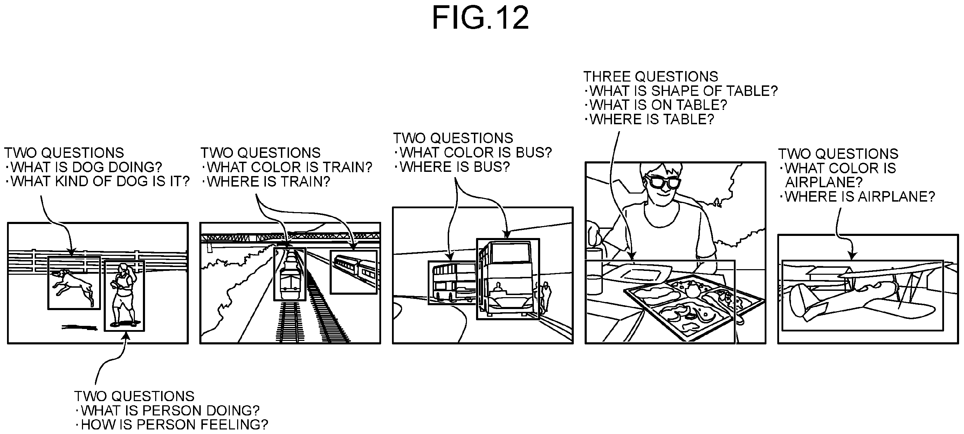

Fig. 12 is a diagram for explaining Example 2 of the effects according to the first arrangement. As illustrated in Fig. 12, by applying a list of questions according to the object, it is possible to reduce the amount of VQA processing. In the example of Fig. 12, VQA is only applied 2 + 2 + 2 + 2 + 3 + 2 = 13 times with respect to five images.

In the conventional VQA also, the feature quantity of the detected substance has been used (Anderson, Peter, et al. "Bottom-up and top-down attention for image captioning and visual question answering." Proceedings of the IEEE conference on computer vision and pattern recognition. 2018). However, the feature quantity of all the substances in the image and the question had a one-to-one correspondence. Thus, in the example of Fig. 4 described above, because the list of questions on six types of substances includes 23 questions, if the list of questions is applied to five images the same as those in Fig. 12, the VQA process needs to be performed 23*5 = 115 times.

### Second Arrangement

Next, a second arrangement will be described. In the description of the second arrangement, the same descriptions as those of the first arrangement will be omitted, and portions different from those in the first arrangement will be described. In the second arrangement, to answer a question on a moving image in a stable manner, voting is taken into account.

### Example of Functional Configuration

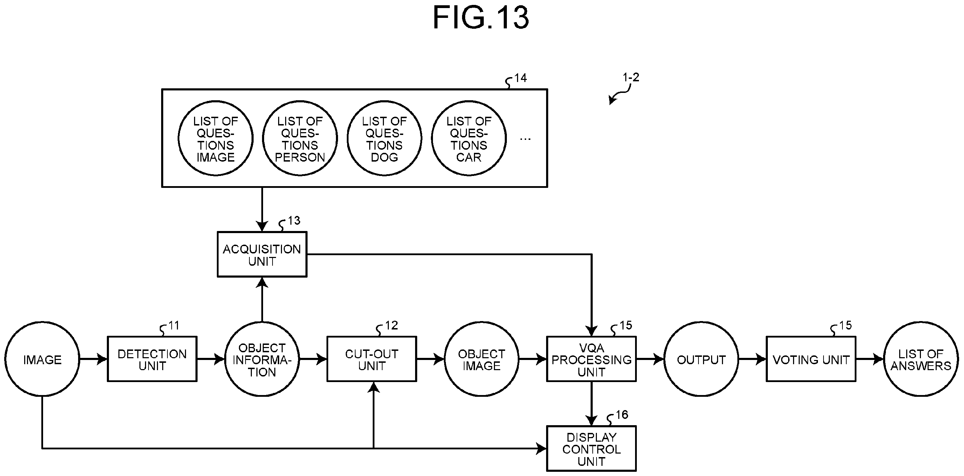

Fig. 13 is a diagram illustrating an example of a functional configuration of an information processing device 1-2 of the second arrangement. The information processing device 1-2 of the second arrangement includes the detection unit 11, the cut-out unit 12, the acquisition unit 13, the storage unit 14, the VQA processing unit 15, the display control unit 16, and a voting unit 17. In the second arrangement, the voting unit 17 is added to the configuration of the first arrangement.

The detection unit 11 detects at least one of the pieces of object information described above from a frame included in the moving image.

The voting unit 17 votes the answer to the question obtained by performing the VQA process on the object image generated for each frame included in a moving image, and determines the answer to the question for each object image on the basis of the results of vote.

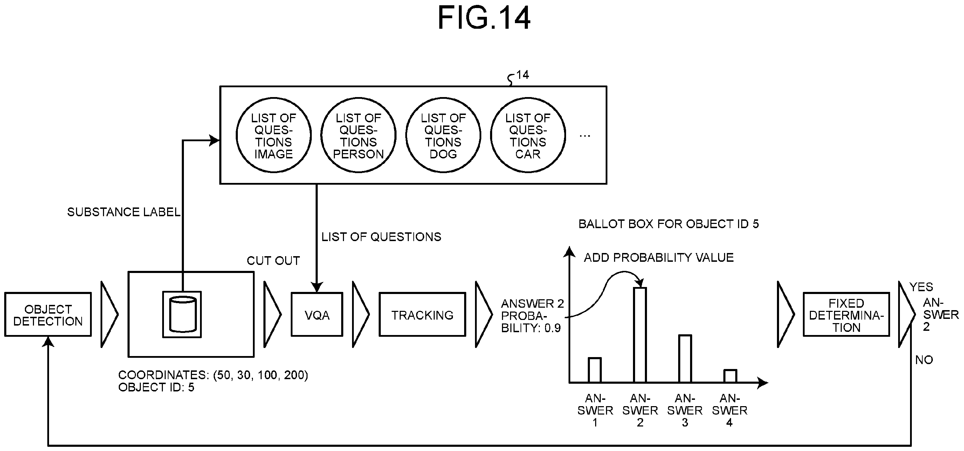

Fig. 14 is a schematic diagram illustrating an example of a voting process in the second arrangement. Upon finding an object, the detection unit 11 returns the coordinates of the box containing the object, and the object ID for identifying the object being tracked. In the example of Fig. 14, the format of the box coordinates is a rectangle (x-coordinate of the upper left, the y-coordinate of the upper left, the x-coordinate of the lower right, and the y-coordinate of the lower right).

The voting unit 17 prepares a ballot box (answer bin) for each object ID to implement statistical VQA.

The cut-out unit 12 cuts out the object area specified by the box coordinates, and inputs the cut-out object area into the VQA processing unit 15. Moreover, the acquisition unit 13 acquires the list of questions according to the label of the object area from the storage unit 14, and inputs the list of questions into the VQA processing unit 15.

The VQA processing unit 15 returns the most likely answer to the object image and the predicted probability of the answer.

The voting unit 17 performs voting by adding the predicted probability to the answer bin of the ballot box. As an increase in the same answer in a large number of frames, the answer bin is extended. Finally, the voting unit 17 makes a fixed determination on the basis of the fixing conditions, and when the fixing is made, the voting unit 17 outputs the answer with the most votes as the final answer. When the answer is not fixed, a new frame is input to the detection unit 11, and the process starts again from the object detection.

For example, to track an object (for example, a substance, a person, or the like), a method of tracking an object that overlaps most with a bounding box (bbox) containing the object among the frames is used, by using Intersection over Union (IoU).

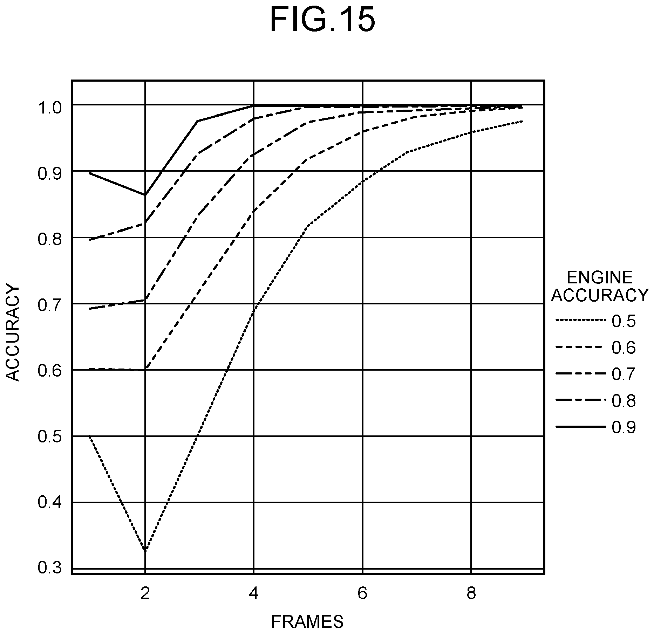

Fig. 15 is a diagram illustrating a relation between the number of votes and recognition accuracy in the second arrangement. As illustrated in Fig. 15, a statistical determination can be made, by voting the answer in the multiple frames included in a moving image. The example in Fig. 15 illustrates the recognition accuracy in a case when every time VQA obtains an answer to one frame, the answer is voted, and when the most voted answer of the frames is used as the final answer result.

When voting takes place between two frames, the votes are divided into two and reduces the decision power.

Hence, the accuracy is reduced. However, the accuracy is significantly improved by three frames or more. Naturally, the final accuracy converges faster with an increase in accuracy of a single engine (AI model of VQA) (Engine Accuracy). From this reason, the voting unit 17 of the second arrangement performs voting with a voting method for three frames or more.

### Example of Information Processing Method

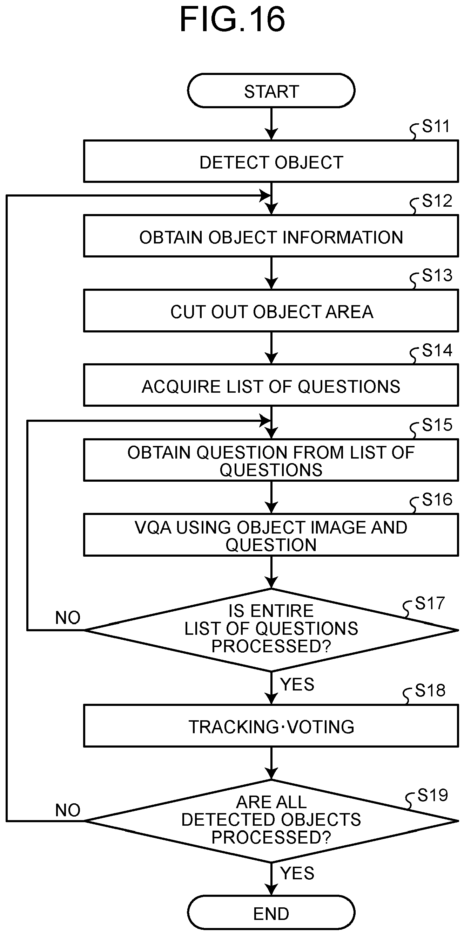

Fig. 16 is a flowchart illustrating an example of an information processing method in the second arrangement. Because the processes at steps S11 to S17 and S19 are the same as those at steps S1 to S8 of the first arrangement, the description thereof will be omitted.

In the second arrangement, the VQA process is first performed on the object to be detected in each frame included in the moving image, followed by the voting process for the answer with respect to the object to be detected tracked by multiple frames (step S18).

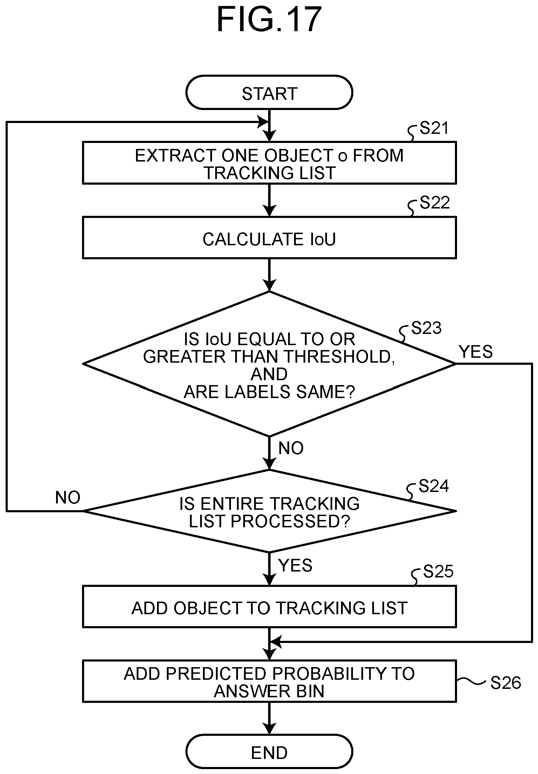

Fig. 17 is a flowchart illustrating an example of a voting process at step S18 in the second arrangement. First, the voting unit 17 extracts one object o from a tracking list containing at least one object to be tracked (step S21).

Next, the voting unit 17 calculates the IoU between the bbox of the previous frame of the object o and the bbox of the frame to be processed (step S22). Next, the voting unit 17 determines whether the IoU is equal to or greater than a threshold, and whether the labels of the two bboxes used to calculate the IoU are the same (step S23).

If the IoU is equal to or greater than the threshold, and if the labels of the two bboxes used to calculate the IoU are the same (Yes at step S23), the predicted probability is added to the ballot box (answer bin) for the object to be identified by the label (step S26).

If the IoU is less than the threshold, or if the labels of the two bboxes used to calculate the IoU are not the same (No at step S23), the voting unit 17 determines whether all the objects to be tracked in the tracking list are processed (step S24). If all the objects to be tracked in the tracking list are not yet processed (No at step S24), the process returns to step S21.

If all the objects to be tracked in the tracking list are processed (Yes at step S24), the voting unit 17 adds the object included in the bbox of the frame to be processed to the tracking list as a new object to be tracked, because the object included in the bbox of the frame to be processed is not in the tracking list (step S25). Next, the voting unit 17 adds the predicted probability to the ballot box (answer bin) for the object included in the bbox of the frame to be processed (step S26) .

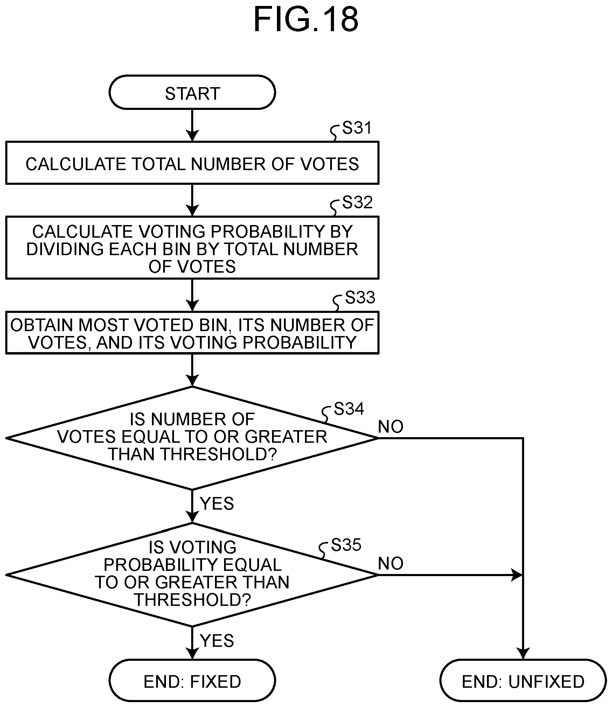

Fig. 18 is a flowchart illustrating an example of a fixing process at step S18 in the second arrangement. First, the voting unit 17 calculates the total number of votes for the answer to the question (step S31). Next, the voting unit 17 calculates the voting probability by dividing each answer bin by the total number of votes calculated at step S31 (step S32). Next, the voting unit 17 identifies the most voted bin, and obtains the number of votes to the most voted bin, and the voting probability of the most voted bin (step S33).

Next, the voting unit 17 determines whether the number of votes obtained at step S33 is equal to or greater than a threshold (step S34). If the number of votes is not equal to or greater than the threshold (No at step S34), the voting unit 17 leaves the answer as unfixed, and finishes the process.

If the number of votes is equal to or greater than the threshold (Yes at step S34), the voting unit 17 determines whether the voting probability obtained at step S33 is equal to or greater than a threshold (step S35). If the voting probability is not equal to or greater than the threshold (No at step S35), the voting unit 17 leaves the answer as unfixed, and finishes the process.

If the voting probability is equal to or greater than the threshold (Yes at step S35), the voting unit 17 fixes the answer, and finishes the process. That is, if a certain degree of confidence can be obtained (the number of votes is equal to or greater than a threshold, and the voting probability is equal to or greater than a threshold), the voting unit 17 interrupts the process and determines the answer.

With the flowchart in Fig. 18, it is possible to obtain an answer to the question, when a moving image (camera image) is input.

### Third Arrangement

Next, a third arrangement will be described. In the description of the third arrangement, the same descriptions as those of the first arrangement will be omitted, and portions different from those in the first arrangement will be described. In the third arrangement, to improve the accuracy of the answer to the question, the object image is transformed.

### Example of Functional Configuration

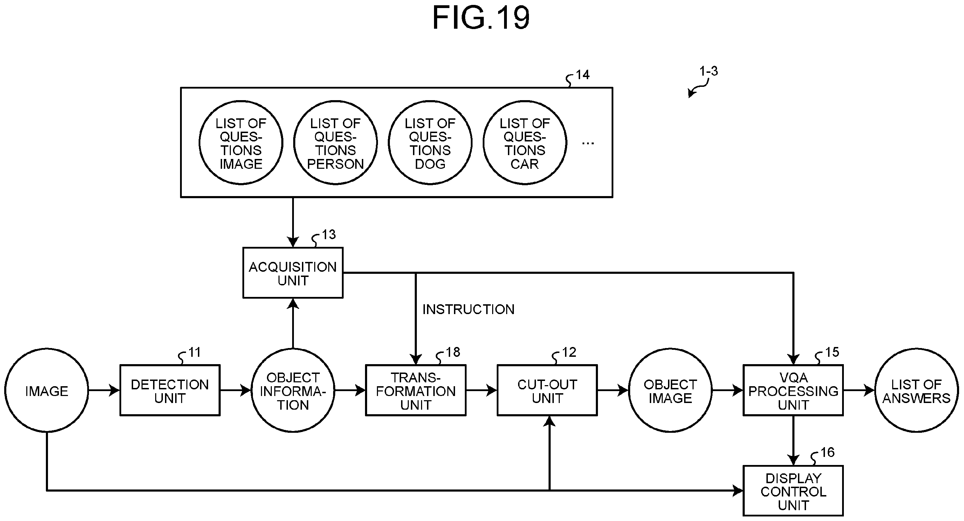

Fig. 19 is a diagram illustrating an example of a functional configuration of the information processing device 1 of the third arrangement. An information processing device 1-3 of the third arrangement includes the detection unit 11, the cut-out unit 12, the acquisition unit 13, the storage unit 14, the VQA processing unit 15, the display control unit 16, and a transformation unit 18. In the third arrangement, the transformation unit 18 is added to the configuration of the first arrangement.

The transformation unit 18 transforms an object area (for example, a box) detected by the detection unit 11, according to at least one of the label for identifying the object and the question.

For example, the transformation unit 18 merges the box of a person and the box of a dog that are present close to each other, and transforms the boxes into a new box. Moreover, for example, in a case when a question such as "Is the person on a step ladder?" is asked for a person, it is assumed that the step ladder is present under the person. Hence, the transformation unit 18 extends the box containing the person to the lower side.

For example, the transformation method is stored while being associated with each question in the list of questions. Specifically, the transformation method for a box is not associated with a question such as "What is the gender?". On the other hand, the transformation method for increasing the box by 1.5 times is associated with a question such as "What is the person doing?", because there is a need to check the surroundings to determine the behavior.

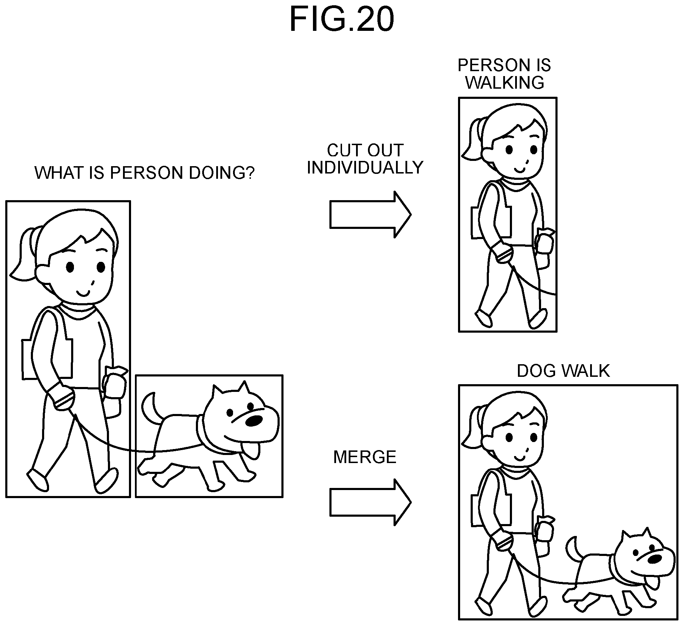

Fig. 20 is a diagram for explaining a processing example of the transformation unit 18 in the third arrangement. In a scene where a person is taking a dog for a walk, Fig. 20 illustrates an example of a question, "What is the person doing?". If the object area is cut out individually for each object, as illustrated in the upper part in Fig. 20, only a person is cut out. Hence, it is assumed that an answer such as "The person is walking" is made instead of "The person is taking a dog for a walk".

On the other hand, as the lower part in Fig. 20, if the transformation unit 18 transforms the object area by merging the box of a person and the box of a dog close to each other, and if the cut-out unit 12 cuts out the transformed object area as a new box, it is possible to obtain "The person is taking a dog for a walk" as an answer.

### Fourth Arrangement

Next, a fourth arrangement will be described. In the description of the fourth arrangement, the same descriptions as those of the first arrangement will be omitted, and portions different from those in the first arrangement will be described. In the fourth arrangement, an object is detected by open-vocabulary.

Normal object detection can only detect an object of the type corresponding to the label defined during the training. For example, even if a user wishes to ask a question on a sports car, a label of car needs to be used. Hence, cars other than the sports car are also detected as objects. In recent years, open-vocabulary object detection has been developed for such problems (Gu, Xiuye, et al. "Open-vocabulary object detection via vision and language knowledge distillation." arXiv preprint arXiv: 2104.13921 (2021)). Open-vocabulary object detection is a type of object detection where a user can specify a label at the time of detection. Hence, it is possible to detect a sports car.

### Example of Functional Configuration

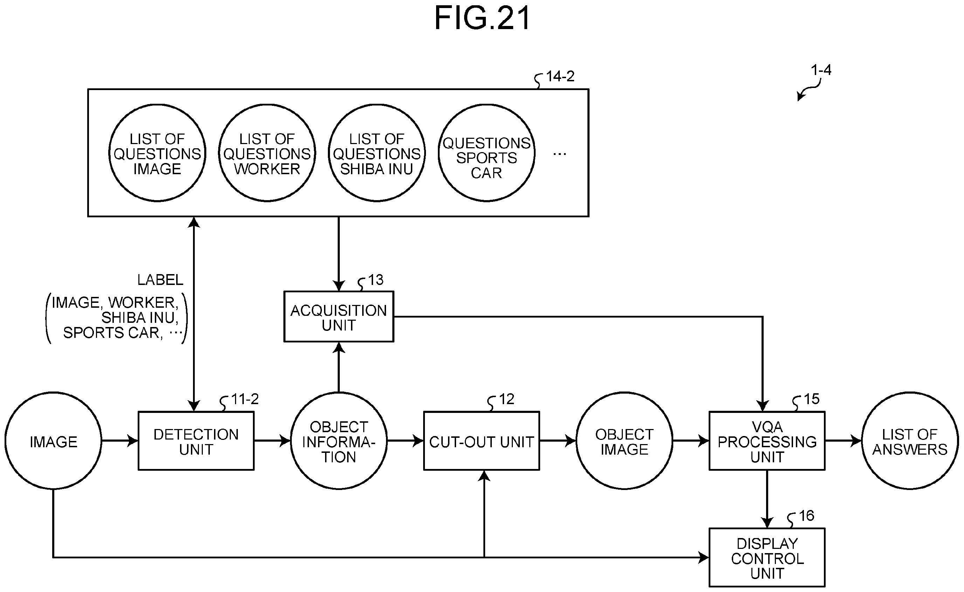

Fig. 21 is a diagram illustrating an example of a functional configuration of the information processing device 1 of a fourth arrangement. An information processing device 1-4 of the fourth arrangement includes a detection unit 11-2, the cut-out unit 12, the acquisition unit 13, a storage unit 14-2, the VQA processing unit 15, the display control unit 16, and the transformation unit 18.

The detection unit 11-2 detects an object from an image using open-vocabulary. In the object detection using open-vocabulary, the label of the object to be detected must be given during inference. Hence, as illustrated in Fig. 21, the detection unit 11-2 reads the label specified with the question from the storage unit 14-2, and uses the read label as an input label for the object detection using open-vocabulary.

That is, the detection unit 11-2 detects at least one piece of object information including an object area containing an object to be detected of the input label (an example of object type) read from the storage unit 14-2 and an object ID (an example of object identification information), from an image.

### Fifth Arrangement

Next, a fifth arrangement will be described. In the description of the fifth arrangement, the same descriptions as those of the first arrangement will be omitted, and portions different from those in the first arrangement will be described. The functional configuration of the information processing device 1 in the fifth arrangement is the same as that in the first arrangement.

The detection unit 11 of the fifth arrangement receives a question sentence from a user, and detects an object according to the question sentence. For example, upon receiving a question sentence of "What is the gender?", the detection unit 11 identifies that the label (an example of the object type) of the object to be detected is a "person", and detects the object to be detected classified into the label from the image. Then, the VQA processing unit 15 applies the question of "What is the gender?" with respect to the object image that is detected by the detection unit 11 and that is cut out by the cut-out unit 12, and outputs the answer.

Finally, an example of a hardware configuration of the information processing device 1 (1-2 to 1-4) in the first to fifth arrangements will be described.

### Example of Hardware Configuration

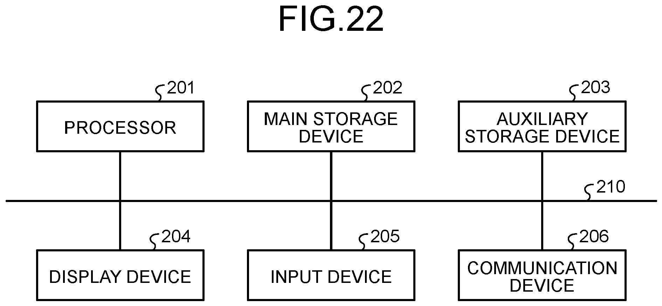

Fig. 22 is a diagram illustrating an example of a hardware configuration of the information processing device 1 (1-2 to 1-4) in the first to fifth arrangements. The information processing device 1 includes a processor 201, a main storage device 202, an auxiliary storage device 203, a display device 204, an input device 205, and a communication device 206. The processor 201, the main storage device 202, the auxiliary storage device 203, the display device 204, the input device 205, and the communication device 206 are connected via a bus 210.

The information processing device 1 may not include some of the components described above. For example, if the information processing device 1 can use an input function and a display function of an external device, the information processing device 1 may not include the display device 204 and the input device 205.

The processor 201 executes the computer program read from the auxiliary storage device 203 to the main storage device 202. The main storage device 202 is a memory such as a Read Only Memory (ROM) and a Random Access Memory (RAM). The auxiliary storage device 203 is a Hard Disk Drive (HDD), a memory card, or the like.

For example, the display device 204 is a liquid crystal display or the like. The input device 205 is an interface for operating the information processing device 1. The display device 204 and input device 205 may also be implemented by a touch panel or the like having a display function and an input function. The communication device 206 is an interface for communicating with other devices.

For example, a computer program executed by the information processing device 1 is provided as a computer program product by being recorded on a computer-readable storage medium such as a memory card, a hard disk, a CD-RW, a CD-ROM, a CD-R, a DVD-RAM, and a DVD-R in an installable or executable file format.

Moreover, for example, the computer program to be executed by the information processing device 1 may be stored on a computer connected to a network such as the Internet, and provided by being downloaded through the network.

Furthermore, for example, the computer program executed by the information processing device 1 may be provided via a network such as the Internet without being downloaded. Specifically, for example, the computer program may also be provided by a cloud service such as an Application Service Provider (ASP).

Still furthermore, for example, the computer program of the information processing device 1 may be provided by being incorporated in advance in a ROM or the like.

The computer program executed by the information processing device 1 has a module configuration including the functions that can be implemented by the computer program among the functional configurations described above. As actual hardware, the processor 201 reads the computer program from the storage medium and executes the computer program to load the functional blocks described above on the main storage device 202. That is, each of the functional blocks described above is generated on the main storage device 202.

Some or all of the functions described above may not be implemented by software, but may be implemented by hardware such as an Integrated Circuit (IC).

Still furthermore, each function may be implemented using a plurality of the processors 201, and in such a case, each of the processors 201 may implement one of the functions, or may implement two or more of the functions.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the apparatuses described herein may be made.

Example 1. An information processing device including:
a detection unit configured to detect at least one piece of object information including an object area containing an object to be detected and object identification information for identifying the object to be detected, from an image;
a cut-out unit configured to generate at least one object image, by cutting out at least one object area from the image;
an acquisition unit configured to acquire at least one question according to the object identification information; and
a visual question answering (VQA) processing unit configured to perform a VQA process with the at least one question, for each of the at least one object image.

Example 2. The information processing device according to Example 1, further including a storage unit configured to store at least one question for each object type indicating a type of object to be detected, wherein
the object identification information includes information indicating an object type, and
the acquisition unit is configured to acquire at least one question according to the object type included in the object identification information, from the storage unit.

Example 3. The information processing device according to Example 2, wherein the detection unit is configured to detect at least one piece of object information including an object area, and the object identification information, from the image, the object area containing an object to be detected of an object type read out from the storage unit.

Example 4. The information processing device according to Example 2 or 3, wherein the detection unit is configured to receive a question sentence on the image from a user, identify the object type from the question sentence, and detect at least one piece of object information including an object area and the object identification information, the object area containing an object to be detected of the identified object type.

Example 5. The information processing device according to Example 2 or 3, further including a transformation unit configured to transform the object area according to at least one of the object type and the question sentence, wherein
the cut-out unit is configured to generate at least one object image, by cutting out at least one object area or at least one object area transformed by the transformation unit, from the image.

Example 6. The information processing device according to any one of Examples 1 to 3, wherein
the acquisition unit is configure to assign question identification information to at least one question applied to each object image, and
the VQA processing unit is configured to output VQA process result information in which the object identification information, the question identification information, and an answer to a question identified by the question identification information are associated with one another.

Example 7. The information processing device according to Example 6, further including a display control unit configured to display, on a display device, display information in which the VQA process result information is assigned to an object to be detected identified by the object identification information included in the VQA process result information.

Example 8. The information processing device according to at least one of Examples 1 to 3, wherein
the image is a frame included in a moving image, and
the detection unit is configured to detect at least one piece of object information from the frame, and
the information processing device further includes a voting unit configured to vote an answer to a question obtained by performing the VQA process on the object image generated for each frame, and determine an answer to the question for each object image, based on a result of vote.

Example 9. A computer-readable medium including instructions which, when executed by a computer, cause the computer to function as:
a detection unit configured to detect at least one piece of object information including an object area containing an object to be detected and object identification information for identifying the object to be detected, from an image;
a cut-out unit configured to generate at least one object image, by cutting out at least one object area from the image;
an acquisition unit configured to acquire at least one question according to the object identification information; and
a visual question answering (VQA) processing unit configured to perform a VQA process with the at least one question, for each of the at least one object image.

Example 10. An information processing method including:
by an information processing device, detecting at least one piece of object information including an object area containing an object to be detected and object identification information for identifying the object to be detected, from an image;
by the information processing device, generating at least one object image, by cutting out at least one object area from the image;
by the information processing device, acquiring at least one question according to the object identification information; and
by the information processing device, performing a visual question answering (VQA) process with the at least one question, for each of the at least one object image.

## Claims

1. An information processing device (1) comprising:
a detection unit (11) configured to detect at least one piece of object information including an object area containing an object to be detected and object identification information for identifying the object to be detected, from an image;
a cut-out unit (12) configured to generate at least one object image, by cutting out at least one object area from the image;
an acquisition unit (13) configured to acquire at least one question according to the object identification information; and
a visual question answering (VQA) processing unit (15) configured to perform a VQA process with the at least one question, for each of the at least one object image.

2. The information processing device (1) according to claim 1, further comprising a storage unit (14) configured to store at least one question for each object type indicating a type of object to be detected, wherein
the object identification information includes information indicating an object type, and
the acquisition unit (13) is configured to acquire at least one question according to the object type included in the object identification information, from the storage unit (14).

3. The information processing device (1) according to claim 2, wherein the detection unit (11) is configured to detect at least one piece of object information including an object area, and the object identification information, from the image, the object area containing an object to be detected of an object type read out from the storage unit (14) .

4. The information processing device (1) according to claim 2 or 3, wherein the detection unit (11) is configured to receive a question sentence on the image from a user, identify the object type from the question sentence, and detect at least one piece of object information including an object area and the object identification information, the object area containing an object to be detected of the identified object type.

5. The information processing device (1) according to claim 2 or 3, further comprising a transformation unit (18) configured to transform the object area according to at least one of the object type and the question sentence, wherein
the cut-out unit (12) is configured to generate at least one object image, by cutting out at least one object area or at least one object area transformed by the transformation unit (18), from the image.

6. The information processing device (1) according to any one of claims 1 to 3, wherein
the acquisition unit (13) is configure to assign question identification information to at least one question applied to each object image, and
the VQA processing unit (15) is configured to output VQA process result information in which the object identification information, the question identification information, and an answer to a question identified by the question identification information are associated with one another.

7. The information processing device (1) according to claim 6, further comprising a display control unit (16) configured to display, on a display device, display information in which the VQA process result information is assigned to an object to be detected identified by the object identification information included in the VQA process result information.

8. The information processing device (1) according to at least one of claims 1 to 3, wherein
the image is a frame included in a moving image, and
the detection unit (11) is configured to detect at least one piece of object information from the frame, and
the information processing device (1) further comprises a voting unit configured to vote an answer to a question obtained by performing the VQA process on the object image generated for each frame, and determine an answer to the question for each object image, based on a result of vote.

9. A computer-readable medium comprising instructions which, when executed by a computer (201), cause the computer (201) to function as:
a detection unit (11) configured to detect at least one piece of object information including an object area containing an object to be detected and object identification information for identifying the object to be detected, from an image;
a cut-out unit (12) configured to generate at least one object image, by cutting out at least one object area from the image;
an acquisition unit (13) configured to acquire at least one question according to the object identification information; and
a visual question answering (VQA) processing unit configured to perform a VQA process with the at least one question, for each of the at least one object image.

10. An information processing method comprising:
by an information processing device (1), detecting at least one piece of object information including an object area containing an object to be detected and object identification information for identifying the object to be detected, from an image;
by the information processing device (1), generating at least one object image, by cutting out at least one object area from the image;
by the information processing device (1), acquiring at least one question according to the object identification information; and
by the information processing device (1), performing a visual question answering (VQA) process with the at least one question, for each of the at least one object image.
